# EUROPEAN PATENT APPLICATION

(11) **EP 4 542 851 A1**
(43) Date of publication of application: **23.04.2025**
(21) Application number: 23315394.9
(22) Date of filing: 20.10.2023
(51) Int. Cl.: H02P 29/50, B25J 9/16, G05B 19/404

(54) **COMPUTER-IMPLEMENTED METHOD FOR GENERATING A SIGNAL FOR COMPENSATING FOR A DISTURBANCE INTRODUCED BY A COMPONENT OF A DEVICE**

(71) Applicant: Veolia Nuclear Solutions UK Ltd, Abingdon OX14 1RL (GB)
(72) Inventor: KING, Ryan, OX14 1RLO ABINGDON (GB); FIROUZI, Sina, OX14 1RLO ABINGDON (GB)
(74) Representative: Oak & Fox

(57) **Abstract**

The invention relates to a computer implemented method (10) for automatically generating a compensating signal to compensate for at least one disturbance introduced by at least one component of a first device, the method (10) comprising the following steps:
• Receiving (REC₁), by means of a first communication interface, a first dataset characterizing a state of the at least one component of the first device ;
• Performing the following steps by means of a first calculator:
∘ Computing (CMP₁) a motion signal using the first dataset, said motion signal resulting from at least one motion of the first device, and characterizing at least one disturbance introduced by at least one component of the first device ;
∘ Automatically generating (GEN1) the compensating signal using said determined at least one parameter.

## Description

### FIELD

The invention relates to the field of computer-implemented signal processing methods.

More particularly, the invention relates to a computer-implemented method to compensate for at least one disturbance introduced by at least one component of a first device.

### BACKGROUND

Most devices will exhibit punctual or periodic disturbances while functioning that are caused by a state of at least one of their components.

For example, motors and motor-controller pairings may exhibit periodic torque disturbances, or torque ripple, throughout a rotation. These disturbances occur at fixed intervals throughout a rotation, and differ in their frequency (once per revolution, four times per revolution, seven times etc.), magnitude, and offset from a reference zero angle for the motor.

Currently, it exists solutions to provide mitigation in the form of torque compensation tables to counteract the disturbance torques, some with tools to aid with configuration, and others that rely on manual user calibration.

A drawback of manual calibration, maintenance or repairing of components of a device is that it is sometimes extremely time consuming and labor intensive.

Another problem stems from the fact that some disturbances introduced by some components, such as the torque ripple in a motor, may depend on multiple time dependent parameters which are intrinsic to the component itself, but may also depend on external parameters. This leads to multi-dimensional problems that are challenging and time consuming to solve.

Moreover, some companies use systems that comprise a lot of various components for operation for which it is essential to minimize the disturbances, for example systems for precise positioning operations.

This result in the need for purchasing high quality components for building the devices, as well as frequent calibration and/or maintenance, both resulting in substantial costs.

Such devices may also embed a lot of electronic components in order to control the efficiency of the device, resulting in additional costs and a heavier device.

Methods for compensating for disturbances introduced by a component of a device are known in the prior art. For example, an article titled "Adaptive internal model-based suppression of torque ripple in brushless DC motor drives" by Yoni Mandel & Georges Weiss proposes a method to minimize torque ripple introduced by an electric method. However, such method lacks accuracy and do not allow for identifying and compensating for various sources of disturbances introduced by various components of a device.

As a result, there is a need to provide a more accurate and more adaptable method which can be applied for various kind of disturbances introduced by various components of a device.

The invention aims at least at limiting the drawbacks of the method existing in the prior art.

### SUMMARY

According to a first aspect, the invention relates to a computer-implemented method for automatically generating a compensating signal to compensate for at least one disturbance introduced by at least one component of a first device, the method comprising the following steps:
- Receiving, by means of a first communication interface, a first dataset characterizing a state of the at least one component of the first device;
- Performing the following steps by means of a first calculator:
   o Computing a motion signal using the first dataset, said motion signal resulting from at least one motion of the first device, and characterizing at least one disturbance introduced by at least one component of the first device;
   o Filtering the motion signal to remove frequencies outside of at least one frequency range of interest, said filtering allowing to generate at least one filtered motion signal characteristic of at least one disturbance source;
   o Determining at least one parameter related to the motion signal,

Automatically generating the compensating signal using said determined at least one parameter.

One advantage is to allow to improve the performances of the first device.

Another advantage is to allow to reduce the costs associated with the first device, such as maintenance costs or costs for replacement of a component.

Another advantage is to allow to improve the lifespan of at least one component of the first device.

Another advantage is to allow to reduce the risks of failure of at least one component of the first device.

In one embodiment, at least one calculated parameter related to the filtered motion signal comprises a phase shift of a graphical representation of said filtered motion signal.

One advantage is to calculate the parameter associated with the filtered motion signal more accurately, in order to generate a more efficient compensating signal.

In one embodiment, a mathematical function is fitted to the filtered motion signal, and at least one parameter is determined using an equation and/or a graphical representation of said mathematical function.

One advantage is to calculate the parameter associated with the filtered motion signal more accurately, in order to generate a more efficient compensating signal.

In one embodiment, at least one calculated parameter of the mathematical function comprises an amplitude of a graphical representation of said mathematical function.

In one embodiment, the mathematical function is a sinusoidal function. In one embodiment, the mathematical function is a sinusoidal function whose equation is F₃ = A_{F3}*sin (2 π*fx* + ϕ_{F3}) with f a frequency parameter of the mathematical function, x a position parameter of the mathematical function, A_{F3} an amplitude of the mathematical function, and ϕ_{F3} a phase-shift of the mathematical function.

One advantage is to facilitate the calculations necessary for generating the compensating signal.

In one embodiment, at least one parameter related to the motion signal is calculated using a plurality of coefficients obtained using a curve fitting method. It is meant by a "curve fitting method" a method allowing to fit a curve with a given mathematical equation to the filtered motion signal, such as a curve as close as possible to the shape of the filtered motion signal. For example, a sinusoidal curve may be fitted to the filtered motion signal. The plurality of coefficients may be part of the mathematical equation of the curve fitted to the filtered motion signal. Parameters related to the filtered motion signal, such as amplitude and/or phase shift, may be calculated using said coefficients.

One advantage is to facilitate the calculation of at least one parameter associated with the filtered motion signal.

Another advantage is to reduce the computing power necessary to generate the compensating signal.

In one embodiment, at least one component of the first device comprises at least one of the following and/or at least one part of the following: a motor, a controller device, an electronic circuit, a load.

In one embodiment, the received first input dataset comprises at least:
- First time data, motor position data and motor input current data and/or;
- Motor velocity data and second time data and/or,
- Motor torque data.

One advantage is to generate the compensating signal with minimum data.

In one embodiment, the first time data comprise the second time data.

In one embodiment, the second time data comprise the first time data.

In one embodiment, the motion signal comprises a torque signal.

In one embodiment, the motion signal comprises an acceleration signal.

One advantage is to generate the compensating signal with different input data.

In one embodiment, the method comprises a step of receiving, by means of the first communication interface, a second input dataset comprising at least:
- temperature data and/or;
- magnetic field data and/or,
- mechanical data characterizing a state of wear of at least one mechanical component of the first device.

One advantage is to generate the compensating signal for perturbations associated to slow-drifting variables.

In one embodiment, the method comprises a step of executing, by means of the first calculator, a first learning function to automatically adjust the compensating signal.

One advantage is to allow to compensate for the disturbances introduced by at least one component of the first device more accurately.

The first learning function may comprise at least one machine learning algorithm.

In one embodiment, the first learning function comprises a first machine learning algorithm trained using an unsupervised learning method and/or trained using a supervised learning method and/or trained using a self-supervised learning method and/or trained using a reinforcement learning method.

In one embodiment, the method comprises a step of automatically applying the compensating signal to the first device by means of the first calculator.

One advantage is to compensate for the disturbances in real time. In one embodiment, the first device is a robotic device.

In one embodiment, the method is suitable for improving performances of the first device.

This technical effect may be obtained by allowing to compensate for the disturbances introduced by at least one component of the first device. Alternatively, or in addition, this technical effect may be obtained by reducing the weight and congestion of the first device by reducing the needs for embedded electronic to monitor the components of the first device. Alternatively, or in addition, this technical effect may be obtained by allowing a wider modular selection of components of the first device, such as components which are more likely to perform better when associated with other specific components.

In one embodiment, the method is suitable for reducing the costs associated with first device.

This technical effect may be obtained by allowing for cheaper components in the first device, which inherently introduce more disturbances than more expensive components, but that the method allows compensating for in order to reach optimal performance results. Alternatively, or in addition, this technical effect may be obtained by reducing the needs in maintenance operation and/or calibration operations due to the method allowing to compensate for the disturbances introduced by the components. Alternatively, or in addition, this technical effect may be obtained by reducing the needs for embedded electronic material/components.

In one embodiment, the method is suitable for improving the lifespan of at least one component of the first device.

This technical effect may be obtained by allowing to compensate for the disturbances generated by the components, as well as by allowing to reduce the number of components embedded by the first device, such as electronic components.

In one embodiment, the method is suitable for reducing the risks of failure of at least one component of the first device.

This technical effect may be obtained by allowing to compensate for the disturbances generated by the components, as well as by allowing to reduce the number of components embedded by the first device, such as electronic components.

In one embodiment, the method is suitable for improving performances of a robotic telemanipulator system.

In one embodiment, the method is suitable for reducing costs associated with a robotic telemanipulator system.

In one embodiment, the method is suitable for improving the lifespan of a robotic telemanipulator system.

In one embodiment, the method is suitable for reducing the risks of failure in a robotic telemanipulator system.

According to another aspect, the invention relates to a system comprising hardware and software means adapted for and/or configured to perform the method of the invention.

In one embodiment, the hardware and software means comprise the first communication interface.

In one embodiment, the first communication interface is adapted for receiving the first dataset characterizing a state of at least one component of the first device.

In one embodiment, the hardware and software means comprise the first calculator.

In one embodiment, the first calculator is configured to compute the motion signal using the first dataset.

In one embodiment, the first calculator is configured to filter the motion signal on at least one frequency range of interest using a filtering function, said filtering allowing to generate at least one parameter related to the filtered motion signal.

In one embodiment, the first calculator is configured to determine at least one parameter related to the filtered motion signal.

In one embodiment, the calculator is configured to automatically generate the compensating signal using at least one determined parameter.

In one embodiment, the calculator is configured to automatically apply the compensating signal to the first device. Alternatively, or in addition, the calculator may be configured to apply the compensating signal in response to a received command, such as a command received from an equipment of the system, or a command received from an external device.

In one embodiment, the system comprises the first device.

In one embodiment, the system comprises a second device. The second device may be a robotic device. The second device may be coupled to the first device, for example remotely coupled. The second device may be manipulable by a user.

In one embodiment, the second device is coupled to the first device in such a way that a change of state of at least one component of the first device causes a change of state of at least one component of the second device, or conversely. The change of state may be equivalent for the components of each device. It is meant by "equivalent change of state" that the change of state of the component is approximately the same, with a tolerated margin of error.

According to another aspect, the invention relates to a computer-program product comprising instructions which, when the program is executed by a computer, causes the computer to carry out the steps of the method.

According to another aspect, the invention relates to a computer-readable storage medium having stored thereon the computer program product. The computer-readable storage medium is a tangible device. The computer-readable storage medium is not a transient signal.

### BRIEF DESCRIPTION OF THE DRAWINGS

Other features and benefits that characterize embodiments of the present invention will be apparent upon reading the following detailed description and reviewing the associated drawings which illustrate:
Fig. 1: A diagram of steps of the method for automatically generating a compensating signal to compensate for disturbances introduced by at least one component of a first device.
Fig. 2: A schematic representation of the system according to one aspect of the invention in one embodiment wherein it comprises a first device which is a robotic device and a calculator comprising a communication interface.
Fig. 3: An embodiment wherein the first device is a robotic device.
Fig. 4: A right-side view of the right arm of the first device in one embodiment wherein the first device is a robotic device.
Fig. 5A: A front-side view of a forearm, wrist, and end effector of an arm of the first device in one embodiment wherein the first device is a robotic device.
Fig. 5B: A right-side view of a forearm, wrist, and end effector of an arm of the first device in one embodiment wherein the first device is a robotic device.
Fig. 6A: A top view of an end effector of an arm of the first device in one embodiment wherein the first device is a robotic device.
Fig. 6B: A bottom view of an end effector of an arm of the first device in one embodiment wherein the first device is a robotic device.
Fig. 6C: An isometric view of an end effector of an arm of the first device in one embodiment wherein the first device is a robotic device.
Fig. 7: A view of the left interior side of the right arm of the first device in one embodiment wherein the first device is a robotic device.
Fig. 8: A view of a system according to one aspect of the invention, comprising the first device, a second device and a calculator comprising a communication interface.

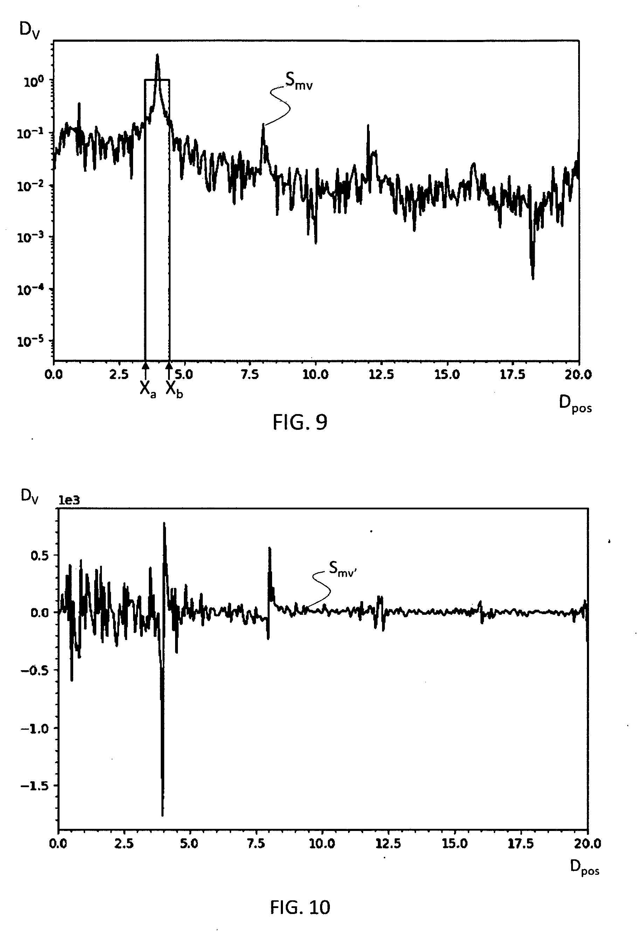

Fig. 9: A graphical representation of the computed motion signal.
Fig. 10: A graphical representation of the filtered motion signal.
Fig. 11: A schematic representation of a hardware configuration of the system of the invention.

### DETAILED DESCRIPTION

### Definitions

Below are definitions of the terms used in the present description.

In the present description, a "disturbance" refers to any kind of disruption introduced by a component of a device.

Examples of disturbances comprise a vibration, a ripple such as a torque ripple, a torque such as a cogging torque, a change of state of a component such as a fast change of state, for example an abrupt acceleration of a component, or a slower change of state of a parameter, such as a variation of temperature of a control card of a motor or a change in magnitude of a magnetic field.

The invention is not limited to the above examples of disturbances, and it should be understood that any disturbance resulting from a change of state of any component of the first device may be considered as a disturbance in the context of the invention.

### Technical problem solved / advantages of the invention.

The invention relates to a computer implemented method 10 for automatically generating a compensating signal S_{comp} to compensate for at least one disturbance introduced by at least one component 101 of a first device 100.

For brevity, the computer implemented method 10 will be referred to as "the method 10" in the present description.

The method 10 advantageously allows to solve the technical problem linked to the appearance of disturbances introduced by components of a device.

For this purpose, the method 10 allows generating a compensating signal S_{comp} to compensate for at least one disturbance introduced by at least one component of a first device 100.

### First device

The method 10 is particularly adapted for generating a compensating signal S_{comp} to compensate for at least one disturbance introduced by at least one component of a robotic device.

However, the first device 100 may also comprise various types of devices, such as an industrial device, a medical device, an exploration device such as a device adapted to be deployed in areas presenting specific environmental constraints, for example space, underwater (as deep-sea), military environment or nuclear environment.

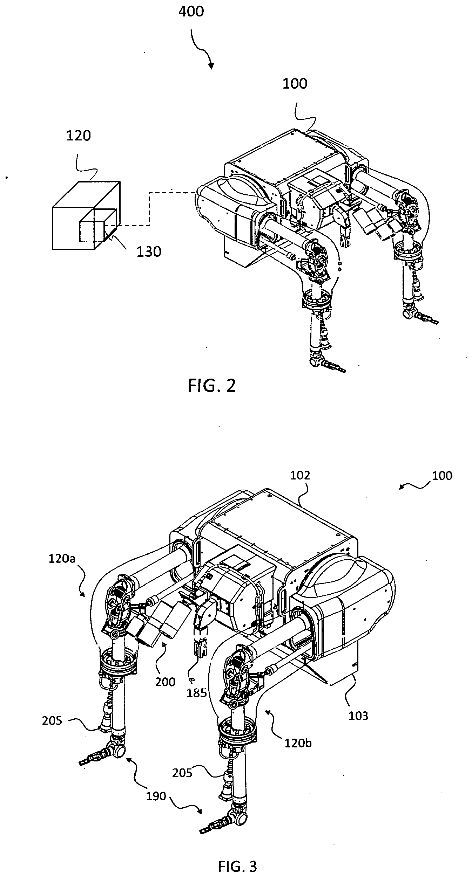

An example of first device 100 will now be described in reference to figure 3, which illustrates a non-limiting embodiment wherein the first device 100 is a robotic device.

The first device 100 illustrated on figure 3 comprises a right arm 120a, a left arm 120b, a chest 102, a cable shield 103, a gripper 190, and an optical detection system 200 and a hoist 185 both mounted to the chest 102. The right arm 120a and the left arm 120b are coupled to the gripper 190. The optical detection system 200 may comprise one or several cameras 205. The optical detection system 200 may be coupled to at least one component and/or to at least one part of the first device 100. For example, at least one camera 205 may be coupled to the right arm 120a and/or to the left arm 120b.

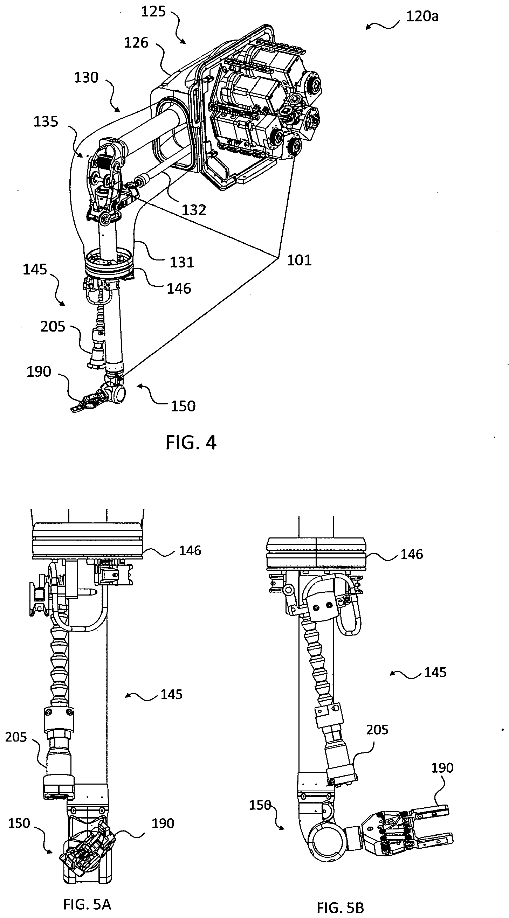

Figure 4 illustrates a right-side view of the right arm 120a according to the non-limiting embodiment wherein the first device 100 is a robotic device. The right arm 120a comprises a shoulder 125, a shoulder cover 126, an upper arm 130, an elbow 135, a forearm 145, and a wrist 150.

The upper arm 130 and elbow 135 may be protected by a protecting device 131, for example a flexible bag 131 cover.

The forearm 145 comprises forearm bearing 146 to facilitate arm swivel. The forearm 145 is coupled to a wrist 150 which is coupled to an end effector 190, such as gripper.

In one embodiment, the right arm 120a and/or the left arm 120b are free in motion according to one or several degrees of freedom, for example six degrees of freedom.

In one embodiment, the end effector 190 is free in motion according to at least one degree of freedom, for example one degree of freedom. In some embodiments, the gripper 190 may have one degree of movement. In some embodiments, the left arm 120b is a mirror of the right arm 120a.

In one embodiment, at least one camera 205 is coupled to the forearm 145.

Figures 5A and 5B illustrates a front and right-side views of an embodiment of the forearm 145, wrist 150, and end effector 190. In the depicted embodiment, a camera 205 is coupled to the forearm 145. The arm bearing 146 facilitates forearm 145 swivel during operations.

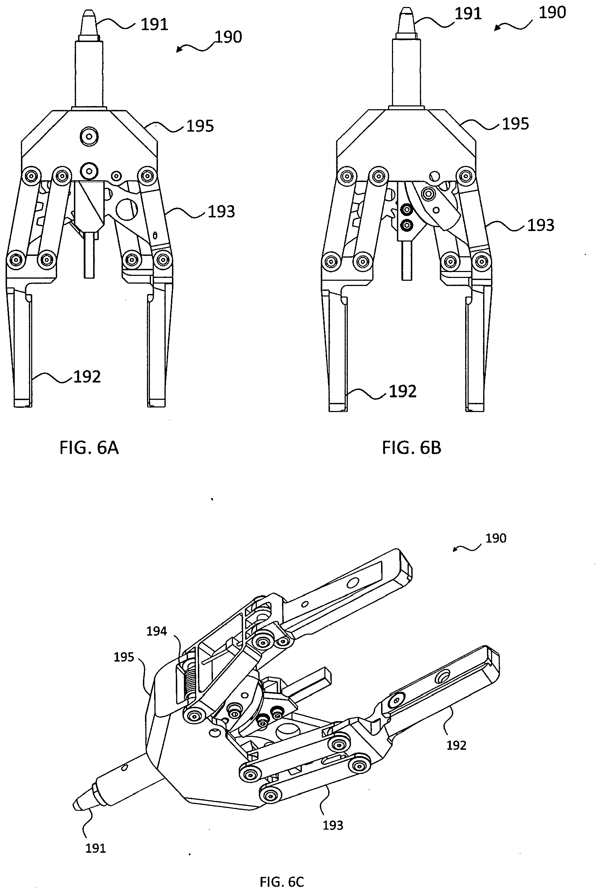

Figures 6A, 6B, and 6C illustrate an embodiment of the end effector 190. Figure 6A is a top view, Figure 6B is a bottom view, and Figure 6C is an isometric view of an embodiment of the end effector 190.

In this embodiment, the end effector 190 comprises a gripper. The gripper comprises a tendon 191, fingers 192, linkages 193, springs 194, and a housing 195. The tendon 191 couples to the forearm 145. The fingers 192 are used to grasp tools or objects in the operating space. The linkages 193 and springs 194 facilitate movement of the fingers 192.

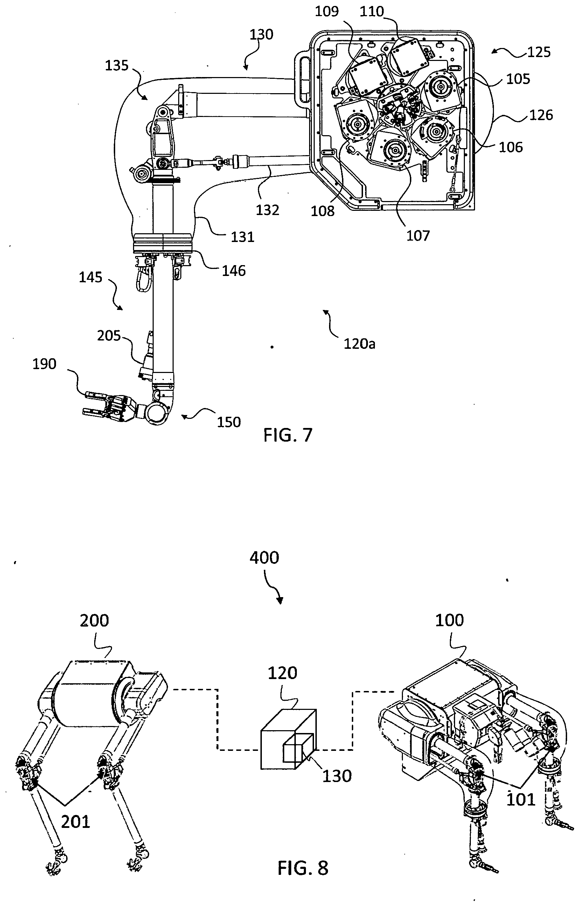

Figures 7 illustrates an embodiment of the left interior side of the right arm 120a. In this embodiment, the right arm 120a is controlled with seven actuators 105-111, six at the base of the arm and one inside the shoulder cover 126.

In this embodiment, a first actuator 105 controls forearm swivel, a second actuator 106 controls gripper open/close, a third actuator 107 and a fourth actuator 108 control wrist rotation, a fifth actuator 109 and a sixth actuator 110 control shoulder pivot, a seventh actuator 111 controls upper arm 130 pivot. The fifth actuator 109 mates with a ¾ quadrant gear and the sixth actuator 110 mates with a ¼ quadrant gear which control range of motion of the shoulder 125 pivot.

In one embodiment, the first device 100 is a control device of a telemanipulating system. The first device 100 may be remotely coupled to a remote device. The first device 100 may be adapted to remotely control a remote device, for example a remote robotic device comprising features of the example of robotic device described in reference to figures 3 to 7.

In one embodiment, the first device 100 is a remote device of a telemanipulating system. The first device 100 may be remotely coupled to a control device. The first device 100 may be adapted to be remotely controlled by a control device, for example a remote robotic device comprising features of the example of robotic device described in reference to figures 3 to 7.

The first device 100 may be adapted to operate in various environments. For example, the first device 100 may be adapted to operate in areas with various environmental conditions, such as areas wherein human presence is not recommended for safety, or areas wherein the conditions render access and performing operations complicated for an operator, such as underwater, nuclear environment, space, military environments, areas subject to weather hazards, areas with uneven ground surface, or more generally any environment with any environmental condition or any geometrical configuration in which human operation presents difficulties or risks, or any environment in which using a device allows better performances or cost savings compared to deploying an operator.

The first device 100 may be movable. For this purpose, the first device may comprise at least one motor, wheels and/or may be guided by means of a rail or any other means suitable to induce motion in the first device.

The first device 100 may be adapted to perform an operation. Examples of operations comprise, but not limited to, lifting; moving; sorting; operating controls such as levers, wheels, buttons, and switches; fitting; connecting and/or disconnecting equipment; manipulating wires, cables, slings, hooks, ropes, and lifting tackle; handling delicate receptacles; pouring liquids; operating pipettes with precision, etc.

The first device 100 may be configured to perform at least one operation automatically. For that purpose, the first device 100 may comprise a memory and a calculator, for example a microcontroller, to store one or several programs comprising instructions for automatically generating and sending commands to the first device 100 according to a set of predefined rules.

Advantageously, the first device 100 may comprise a calculator implementing a learning function. The learning function may be configured to take input data received by the first device, and to update the program based on the input data.

One advantage is to allow the first device 100 to adapt to its environment.

The input data of the learning function may be directly measured and/or calculated by the first device 100 or may be received from an external equipment by means of a communication interface.

The learning function may be a trained learning function. The learning function may comprise a machine learning algorithm. The learning function may comprise a neural network, such as a convolutional neural network. The learning function may be trained by means of a supervised method and/or an unsupervised method and/or a self-supervised method.

Alternatively, or in addition, the learning function may implement a random forest function.

In addition, or alternatively, the first device 100 may be configured by an operator.

In addition, or alternatively, the first device 100 may comprise a communication interface and a calculator configured to receive periodically or punctually data sent from an external device for updating at least one program stored on the first device 100, or for implementing a new program.

The first device 100 may be adapted to perform an operation using at least one tool. The first device 100 may be configured to perform this operation automatically.

Examples of such operations comprise, but not limited to, cutting up waste; removing infrastructure; taking environmental samples; cutting and replacing cables and wire; opening doors and hatches; fitting clips, strapping, electrical terminal blocks, and other fittings; tightening/loosening fastenings and bolts; inspecting and taking measurements; welding and completing welding prep; cutting with water jets; operating industrial power tools -and hand tools; applying/removing lubrication and/or seals; decontaminating with water jets; performing advanced inspections, etc.

In one embodiment, the first device 100 is configured to perform a maintenance operation. The first device 100 may be configured to perform this operation automatically. The first device 100 is for example adapted to perform maintenance operations in various environments.

One advantage is to limit human presence in risky environments, such as space, underwater, military environment, or nuclear environment.

In one embodiment, the first device 100 is configured to perform an inspection operation. The first device 100 may be configured to perform this operation automatically. Such operation may comprise reconnaissance operation, for example in potentially risky areas.

The first device 100 may comprise at least one sensor. The sensor may be used to measure or detect information about its environment. The sensor may be apt at sending information to at least one other device or component of the first device 100, such as a processor and/or a memory. The sensor may operate as a transducer and generate an electrical signal as a function of the measured property. The sensor may comprise a digital sensor and/or an analog sensor. For example, the sensor may provide digital information to a processor and/or to a memory. At least one sensor may provide analog information to a processor and/or a memory. In some embodiments, the information may be converted from one type to another type, e.g., from digital to analog or from analog to digital. For example, in some embodiments, a processor of the first device may compare information to a set point. In some embodiments, analog information is amplified before being compared to the set point. In some embodiments, at least one sensor may be used to measure at least one physical parameter. At least one sensor may be used to measure one of the following, but not limited to: a position, a radiation, a temperature, a sound, a pressure and the like. At least one sensor may comprise a contact sensor and/or a non-contact sensor, humidity sensors. At least one sensor may comprise an image sensor. The image sensor may be apt at generating an image or a video. The image sensor may be apt at converting information such as a variable attenuation of radiation waves (infrared, visible, and/or ultraviolet spectrum radiation as well as other frequencies) into signals that convey the information, such as information to be used to generate an image. The image sensor may comprise, but not limited to, an electronic image sensor such as a charge-coupled device (CCD), an active-pixel sensor (CMOS sensor), or the like. The image sensor may be part of a camera or of another imaging device.

In one embodiment, the first device 100 is configured to perform sample collections. The first device 100 may be configured to perform this operation automatically. For that purpose, the first device 100 may comprise tools or any other arrangement of components suitable to collect samples in a given environment. The first device 100 may be configured to perform data collection on the collected sample. In addition, or alternatively, the first device 100 may be configured to perform direct measurements in areas of interest in a given environment.

In one embodiment, the first device 100 comprises an optical device adapted for decoding a support encoding data. The first device 100 may comprise a reader configured to decode a barcode, a QR-code, or any other support of encoded data.

In one embodiment, the first device 100 comprises an interior space adapted for receiving a human operator. In that case, the first device 100 may comprise a user interface in the interior space for allowing the operator to send commands to the first device 100. In that case, the first device 100 may be considered as a vehicle embarking a user.

In one embodiment, the first device 100 may comprise a component sized for accessing narrow areas, such as a hole in wall, for example a hole presenting a largest dimension inferior to ten centimeters. The first device 100 may for example comprise an arm equipped with sensors and/or devices, for example temperature sensors and cameras, for acquiring data in areas wherein the dimensions of the first device 100 do not allow it to access entirely.

In one embodiment, the first device 100 comprises a memory. The memory may allow to store data acquired by the first device 100, for example data acquired using the sensors. The memory may also allow to store data received from an external device. For that purpose, the first device 100 may comprise a communication interface apt to receive data from an external device, for example through a wireless link. The first device 100 may also comprise a communication interface apt to be connected to another device using a physical link. The first device 100 may also comprise a communication interface allowing exchange of data between components of said first device 100, for example exchange of data between a calculator and a memory. The first device 100 may also comprise a communication interface adapted to be connected to a server through a data network.

In one embodiment, the first device 100 comprises a medical device. The first device may be configured for performing medical operations, for example surgery operations or supporting rehabilitation therapy for patients working to regain motor functions.

In one embodiment, the first device 100 comprises at least one calculator.

The first device 100 may comprise a controller for controlling one or several components of the first device 100.

The first device 100 may comprise at least one processor. The processor may comprise an electric circuit, such as an integrated circuit configured to execute program instructions. The processor may be configured to perform operations such as arithmetic operations, logic operations, controlling operations, and/or input/output operations specified by the program instructions. The processor may comprise a control unit. The control unit may be configured to direct the operation of the processor 103 and/or instruct a memory, instruct the arithmetic logic unit, and instruct output devices how to respond to instructions in the program. The control unit may also direct a flow of data or information between the processor and other components of the controller. The control unit may also control the operation of other components, for example by providing timing and control signals. The processor may comprise any suitable configuration. For example, the processor can range from a simple processor specially built or configured to execute one or more programs for a specific application or device to a complex central processing unit configured to be used in a wide variety of ways and an equally wide variety of applications. Examples of processors include a general-purpose processor, a digital signal processor, an application specific integrated circuit, a central processing unit, a field programmable gate array or other programmable logic device, and/or discrete gate or transistor logic. The processor may also comprise any combination of the precited examples.

The controller may comprise an arithmetic logic unit. The arithmetic logic unit may comprise an electric circuit. The arithmetic logic unit may be configured to perform integer arithmetic and bitwise logic operations. The arithmetic logic unit may be part of the processor. The arithmetic logic unit may comprise a communication interface for receiving input in the form of data or information to be operated on and optionally code describing the operation to be performed. The arithmetic logic unit may provide a result of a performed operation as an output. The arithmetic logic unit may comprise status inputs and/or outputs to convey information about a previous operation or a current operation between said arithmetic logic unit and external status registers.

The first device 100 may comprise a storage device, such as a memory unit. The storage device may comprise, but not limited to, a hard disk storage device, a solid-state storage device, an optical storage device, a magnetic disk (e.g., disk drives), a laser beam (e.g., optical drives), a semiconductor (e.g., solid-state drives), and/or a magnetic tape. The storage device may comprise at least one memory, such as a primary memory, a main memory, a cache memory, a computer readable medium, a volatile memory such as a random-access memory and/or a non-volatile memory such as a read-only memory.

The storage device may be connected to the processor. The storage device may comprise a semiconductor device to store information for immediate use by the processor. The storage device may be connected to the processor in such a way that the processor can read and execute program instructions stored on the storage device. In addition, or alternatively, the storage device may be connected to the processor in such a way that the processor can store information on the storage device.

The storage device may store program instructions, for example program instructions to be executed by the processor. The program instructions may comprise software algorithms and/or application programs. The program instructions may be expressed in the form of methods or processes performed in part or entirely by any suitable component of the first device 100, such as the controller, or may be performed as instructions stored in a computer-readable medium such as the storage device in one embodiment. The program instructions may take the form of software (including firmware, resident software, micro-code, or the like). The program instructions may be stored on or transmitted over a computer-readable medium such as the storage device in one embodiment. In some embodiments, the program instructions may be contained in any tangible medium of expression having program code embodied in the medium. In some embodiments, the program instructions can be written in any combination of one or more programming languages. In some embodiments, the program instructions can include firmware such as a basic input/output system (BIOS), an operating system, one or more application programs, program data, and the like.

The first device 100 may comprise a communication system, such as system bus. The communication system may allow exchange of information between the storage device and the processor. Examples of communication systems comprise a front-side bus, a memory bus, a local bus, or a host bus. The communication system may also allow exchange of information between other devices or interfaces of the first device 100. The communication system may comprise additional input/output buses communicatively linking the various other devices and/or interfaces to the processor. The information shared through the communication system may comprise data, signals such as control signals, commands, bits, symbols, or the like. The information may be represented using a variety of different technologies and techniques. For example, in some embodiments, the information may be represented by voltages, currents, electromagnetic waves, magnetic fields or particles, optical fields, or the like. The communication system may use a variety of architectures, communication protocols, or protocol suites to communicatively link the processor, the storage device, and/or any of the other devices and/or interfaces. For example, suitable architectures for the communication system comprise Industry Standard Architecture (ISA), Extended Industry Standard Architecture (EISA), Micro Channel Architecture (MCA), Video Electronics Standards Association (VESA), Peripheral Component Interconnect (PCI), PCI Express (PCI-X), Personal Computer Memory Card Industry Association (PCMCIA or PC bus), Accelerated Graphics Port (AGP), Small Computer Systems Interface (SCSI), and the like. Suitable communication protocols comprise, but not limited to, TCP/IP, IPX/SPX, Modbus, DNP, BACnet, ControlNet, Ethernet/IP, or the like.

The first device 100 may comprise at least one display device. The display device may comprise a human-machine interface. The display device may comprise at least one screen. The display device may visually convey text, graphics, video, and/or other information. The display device may operate as an output device and/or an input device. For that purpose, the display device may comprise a user interface. The user interface may comprise a touchscreen, or any other kind of suitable user interface. The display device may be connected to the communication system, for example by way of one or more graphics interfaces. The graphic interface may be used to generate a feed of output images to the display device. At least one graphic interface may be a separate component such as a dedicated graphics card or chip. Alternatively, or in addition, at least one graphic interface may be part of the processor. The display device may comprise a variety of physical structures and/or display technologies. For example, the display device may comprise, but not limited to, a screen integrated into a specific application or technology, a separate screen such as a monitor, or the like, a liquid crystal display, a light emitting diode display, a plasma display, a quantum dot display, or the like.

The first device 100 may comprise at least one input device. The input device may be connected to the communication system, the processor and/or the storage device. The input device may comprise a digital and/or analog device. The input device may provide information in a digital or analog format. The input device may be used to provide user input for controlling the controller. Alternatively, or in addition, the input device may be used to provide operational input for controlling aspects of a specific application. The input device may comprise one or more sensors and/or one or more other miscellaneous input devices. It should be appreciated that the input device is not limited to only providing information. In some embodiments, the input device may also be configured to receive information. Such devices can be considered both an input device and an output device. The input device may comprise switches such as limit switches, level switches, vacuum switches, pressure switches, or the like, as well as buttons such as pushbuttons or the like, user interface components such as a pointing device, for example a mouse, text input devices, for example a keyboard, a touch screen, or the like.

The first device 100 comprises several components. It should be understood as "component" of the first device 100 any structural part of the first device and/or any part of a structural part of the first device 100. For example, a motor may be considered as a component of the first device 100 and/or a part of a motor may be considered as well as a component of the first device 100.

At least one component of the first device 100 may comprise, but not limited to, means for inducing a motion of the first device 100, such as a motor, such as an electrical motor, for example an alternating current motor or a direct current motor. At least one component of the first device 100 may comprise a motor comprising a given number of poles, such as a four poles motor or a seven poles motor. It should be understood by "poles" an arrangement of windings of the stator, each pair of poles corresponding to a pair of a north pole and a south pole of the magnetic field generated by the stator (two pairs of poles for a four poles motor and three pairs of poles with an additional pole for a seven poles motor).

One advantage to use a motor with a large number of poles is to reduce an amount of disturbance introduced by the motor, such as an amount of torque ripple. For example, a seven-pole motor may introduce less disturbance than a four-poles motor, or part of such means, such as a stator, a rotor, a shaft, bearings, housing, a cooling apparatus such as a cooling fan, electrical components such as electrical connectors and electrical wires.

The first device 100 may comprise a plurality of housing for receiving one or several components. At least two components of the first device 100 may be linked together by means of a physical link. In addition, or alternatively, at least two components of the first device 100 may be connected to each other remotely, for example by means of a wireless link.

### Computer implemented method

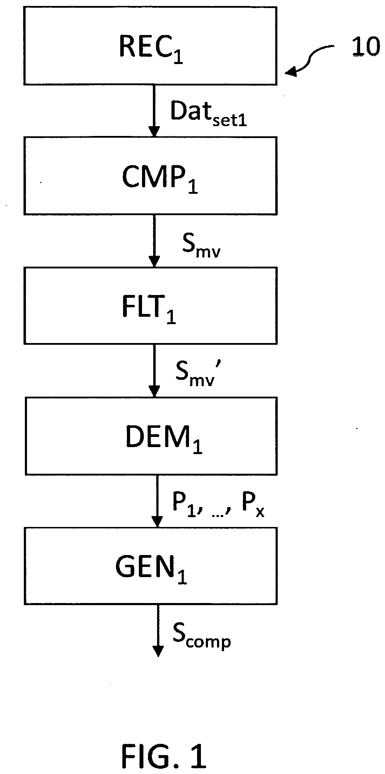

In reference to figure 1, the invention relates to a computer implemented method 10 for automatically generating a compensating signal S_{comp} to compensate for at least one disturbance introduced by at least one component 101 of a first device 100, the method 10 comprising:
- Receiving REC₁, by means of a first communication interface 130, a first dataset DATₛₑₜ₁ characterizing a state of the at least one component 101 of the first device 100;
- Performing the following steps by means of a first calculator 120:
   o Computing CMP₁ a motion signal Sₘᵥ using the first dataset DATₛₑₜ₁, said motion signal Sₘᵥ resulting from at least one motion of the first device 100, and characterizing at least one disturbance introduced by at least one component 101 of the first device 100;
   o Filtering FLT₁ the motion signal Sₘᵥ to remove frequencies outside of at least one frequency range of interest Xₐ, ..., X_{b}, said filtering FLT₁ allowing to generate at least one filtered motion signal S_{mv'} characteristic of at least one disturbance source;
   o Determining DEM₁ at least one parameter P₁, ..., Pₓ of the mathematical function F₃,
   o Automatically generating GEN₁ the compensating signal S_{comp} using said calculated parameter P₁, .. , Pₓ of the mathematical function F₃.

One advantage of the invention is to allow to accurately compensate for disturbances introduced by different kind of components, such as motors or parts of motors, loads or parts of loads, electronic circuitry, mechanical elements, etc. of different kind of devices, such as robotic devices, medical devices, telemanipulator systems, spatial devices, etc.

Another advantage of the invention is to reduce the costs by reducing the needs for time consuming operations and operations requiring operator interventions, such as regular maintenance or calibration of the components of a device, and by enabling a selection of more cost-efficient components, such as cheaper and/or more readily available motors with worse torque ripple, or different motor drive controllers with different performance. The invention advantageously allows to compensate for inherent disturbances introduced by cheaper/lower quality components.

Another advantage of the invention is to allow a wider modular selection of components without significantly impacting the design or implementation for different first devices.

### Reception of the first dataset

In reference to figure 1, the method 10 comprises a step of receiving REC₁, by means of a first communication interface 130, a first dataset DATₛₑₜ₁ characterizing a state of the at least one component 101 of a first device 100.

Advantageously, the received first dataset DATₛₑₜ₁ comprises data characterizing a motion of at least one component 101 of the first device 100. Such data may comprise, but not limited to, velocity data, acceleration data, time series of position data. For example, the first dataset DATₛₑₜ₁ may comprise data characterizing a motion of at least one motor or at least one component of at least one motor of the first device 100.

One advantage is to generate the compensating signal for perturbations linked to the motion of a component of the first device.

Advantageously, the received first dataset DATₛₑₜ₁ comprises data characterizing a physical parameter of at least one component 101 or characterizing an environment of at least one component 101 of the first device 100. For example, the first dataset DATₛₑₜ₁ may comprise temperature data comprising temperature data of a control card of at least one motor of the first device 100. In another example, the first dataset DATₛₑₜ₁ may comprise magnitude data characterizing at least one magnetic field close to at least one component 101 of the first device 100. The first dataset DATₛₑₜ₁ may comprise at least one vector. The vector may comprise a strength component. The vector may comprise a direction component. For example, the first dataset DATₛₑₜ₁ may comprise a vector characterizing a magnetic field, said vector comprising a strength component and a direction component.

One advantage is to generate the compensating signal for perturbations associated to slow-drifting variables.

Advantageously, the received first dataset DATₛₑₜ₁ comprises data characterizing a value intrinsic to at least one component 101 of the first device 100. For example, the first dataset DATₛₑₜ₁ may comprise dimensions of at least one component 101 of the first device 100, such as cable lengths and/or sections, or such as a motor size. In another example, the first dataset DATₛₑₜ₁ may comprise mechanical data D_{meca} characterizing a state of wear of at least one mechanical component of the first device 100, such as data characterizing a state of wear of at least one motor of the first device 100.

One advantage is to generate the compensating signal for perturbations associated to a wear of components of the first device.

Advantageously, the received first dataset DATₛₑₜ₁ comprises data characterizing an input and/or an output of at least one component 101 of the first device 100. For example, the first dataset DATₛₑₜ₁ may comprise data characterizing a load supplying at least one motor of the first device 100, such as motor input current data D_{cur}, or data characterizing a torque of at least one motor of the first device 100, such as motor torque data D_{TQ}.

One advantage is to generate the compensating signal for perturbations not only linked to the component itself, but also to perturbations linked to constraint applied to the component, such as a mechanical constraint, or any other type of constraint.

### Computing the motion signal

In reference to figure 1, the method 10 comprises a step of computing CMP₁ a motion signal Sₘᵥ resulting from at least one motion of the first device 100 and characterizing at least one disturbance introduced by at least one component 101 of the first device 100.

Advantageously, the motion signal Sₘᵥ is computed using the first dataset DATₛₑₜ₁. The motion signal Sₘᵥ may be computed using first time data Dₜᵢₘ₁, motor position data Dₚₒₛ and motor input current data D_{cur}. Alternatively, or in addition, the motion signal Sₘᵥ may be computed using motor velocity data and second time data Dₜᵢₘ₂. Alternatively, or in addition, the motion signal Sₘᵥ may be computed using motor torque data D_{TQ}.

One advantage is to compute the motion signal more accurately.

Advantageously, the motion signal Sₘᵥ is computed by measuring at least one parameter on at least one component 101 of the first device 100, for example a torque or an acceleration of a motor of the first device 100.

One advantage is to ease the computation of the motion signal.

Advantageously, the computed motion signal Sₘᵥ comprises an acceleration signal. The computed motion signal Sₘᵥ may comprise an acceleration signal characterizing an acceleration of at least one motor of the first device 100. The acceleration signal may be measured directly on the first device 100, or may be calculated using the first dataset DATₛₑₜ₁, for example using timestamped velocity data.

One advantage is to allow compensating for perturbation due to a change of velocity of a component, for example a motor.

Advantageously, the computed motion signal Sₘᵥ comprises a motor torque signal. The computed motion signal Sₘᵥ may comprise a motor torque signal measured directly on at least one motor of the first device 100. Alternatively, or in addition, the computed motion signal Sₘᵥ may comprise at least one motor torque signal calculated using the first dataset DATₛₑₜ₁.

One advantage is to allow compensating for disturbances introduced by a motor.

Advantageously, the computed motion signal Sₘᵥ characterizes at least one ripple source in the first device 100. The computed motion signal Sₘᵥ may characterize at least one torque ripple source in the first device 100, or at least one cogging torque source in the first device 100.

### Filtering the motion signal

In reference to figure 1, the method 10 comprises a step of filtering FLT₁ the motion signal Sₘᵥ to remove frequencies outside of at least one frequency range of interest Xₐ, ..., X_{b}, said filtering FLT₁ allowing to generate at least one filtered motion signal Sₘᵥ' characteristic of at least one disturbance source.

Advantageously, the method 10 comprises a step of converting the motion signal Sₘᵥ from a time domain to a frequency domain. This step may be performed using a mathematical function such as a Fast Fourier Transform, or any other suitable mathematical function allowing to convert a signal from a time domain to a frequency domain.

One advantage is to determine the disturbances that exist in the spatial frequencies, for example a torque ripple with a frequency of four cycles per motor turn.

Advantageously, the motion signal Sₘᵥ is filtered using a bandpass filter. Cutoff frequencies of the filter may be parameterized to allow isolating at least one portion of the signal characterizing at least one source of disturbance.

One advantage is to isolate at least one portion of signal characteristic of at least one disturbance.

Advantageously, the filtering FLT₁ allows to generate at least one filtered motion signal Sₘᵥ' characteristic of at least one ripple source at the frequency range of interest Xₐ, ..., X_{b}. For example, the filtered motion signal Sₘᵥ' may comprise at least one portion characteristic of a DC offset and/or may comprise at least one portion characteristic of an asymmetry and/or may comprise at least one portion characteristic of harmonics.

### Mathematical function / curve fitting / parameters

The method 10 comprises a step of determining DEM₁ at least one parameter P₁ related to the filtered motion signal Sₘᵥ'. The determined parameter P₁ may comprise an amplitude of the motion signal Sₘᵥ'. The received parameter P₁ may comprise a phase shift of the filtered motion signal S_{mv'}. The received parameter P₁ may be calculated by means of a calculator, or received from a memory on which said parameter P₁ was previously stored, or received from an external device by means of a communication interface.

One advantage is to allow calculating the compensating signal.

In one embodiment, at least one parameter P₁, ..., Pₓ of the filtered motion signal Sₘᵥ' is calculated using said filtered motion signal Sₘᵥ'. For example, an amplitude or a phase shift of the filtered motion signal Sₘᵥ' may be calculated at the frequency range of interest Xₐ, ..., X_{b}.

In one embodiment, at least two parameters P₁, ..., Pₓ of the filtered motion signal Smv' are calculated using said filtered motion signal S_{mv'}. For example, an amplitude and a phase shift of the filtered motion signal S_{mv'} may be calculated at the frequency range of interest Xₐ, ..., X_{b}.

In one embodiment, the method 10 comprises a step of fitting CUV₁ at least one mathematical function F₃ to the filtered motion signal Sₘᵥ'. The fitting of the mathematical function F₃ may be performed by means of a curve fitting method. The fitted mathematical function F₃ may comprise a sinusoidal function. The fitted mathematical function F₃ may comprise a sinusoidal function whose equation is F₃ = A*sin(2πfx + ϕ) with A the amplitude, f the frequency, x the position and ϕ is the phase shift.

One advantage is to allow calculating an amplitude and a phase shift of the mathematical function which can be used to calculate the compensating signal.

Advantageously, at least one parameter P₁, ..., Pₓ of the mathematical function F₃ is calculated using a plurality of coefficients obtained using a curve fitting method.

### Generating the compensating signal

The method 10 comprises a step of automatically generating GEN₁ a compensating signal S_{comp} using the received parameter P₁.

Advantageously, the compensating signal S_{comp} is generated using at least two parameters P₁, ..., Pₓ related to the filtered motion signal Sₘᵥ'. The two parameters may comprise an amplitude of the filtered motion signal Sₘᵥ' and a phase shift of the filtered motion signal Sₘᵥ'.

One advantage is to generate the compensating signal more accurately.

In one embodiment, the method 10 comprises a step of applying the compensating signal S_{comp} to the first device 100 by means of the calculator 120. The compensating signal S_{comp} may be applied automatically to the first device 100. The compensating signal S_{comp} may be applied in real-time to the first device 100. For example, the method 10 may be performed in real time in such a way that the method 10 allows for compensating periodically for disturbances introduced by at least one component 101 of the first device 100. In addition, or alternatively, the method 10 may be performed in such a way that when a received or calculated value is greater than a predefined threshold value, the compensating signal S_{comp} is automatically applied to the first device 100.

### Machine learning

In one embodiment, the method comprises executing, by means of the first calculator 120, at least one machine learning algorithm to automatically adjust the compensating signal S_{comp}.

In one embodiment, the machine learning algorithm is configured to determine properties of at least one disturbance introduced by at least one component 101 of the first device 100. The machine learning algorithm may for example implement a statistical method.

In one embodiment, the machine learning algorithm is trained to output predicted values to compensate of at least one disturbance introduced by at least one component 101 of the first device 100.

In one embodiment, the machine learning algorithm comprises a neural network. The neural network is for example a convolutional neural network or a recurrent neural network, or a combination of convolutional neural networks and recurrent neural networks. An example of such neural network is a region based convolutional neural network, also designated by the appellation "R-CNN". The neural network may comprise several layers among the following: convolutional layers, pooling layers, dropout layers, fully connected layers also known as dense layers, SoftMax layers, output layers.

In one embodiment, the machine learning algorithm implements a deep learning method.

In one embodiment, the machine learning algorithm is trained using a supervised method. In that case, machine learning algorithm may be trained by receiving labeled input data.

In one embodiment, the machine learning algorithm is trained using a few-shots learning method. It should be understood by a "few shots learning method" that the machine learning algorithm is trained using a small amount of data.

### Method applied to a robotic device of a telemanipulator system

According to another aspect, the invention relates to a computer-implemented method for automatically generating a compensating signal S_{comp} to compensate for at least one disturbance introduced by at least one component of at least one robotic device of a telemanipulator system, the method 10 comprising:
- Receiving REC₁, by means of a first communication interface, a first dataset DATset1 characterizing a state of the at least one component of the robotic device;
- Performing the following steps by means of a first calculator:
   o Computing CMP₁ a motion signal Sₘᵥ using the first dataset DATₛₑₜ₁, said motion signal Sₘᵥ resulting from at least one motion of robotic device, and characterizing at least one disturbance introduced by at least one component of the robotic device;
   o Filtering FLT₁ the motion signal Sₘᵥ to remove frequencies outside of at least one frequency range of interest Xₐ, ..., X_{b}, said filtering FLT₁ allowing to generate at least one filtered motion signal S_{mv'} characteristic of at least one disturbance source;
   o Determining DEM₁ at least one parameter P₁, ..., Pₓ of the mathematical function F₃,
   ∘ Automatically generating GEN₁ the compensating signal S_{comp} using said calculated parameter P₁, ..., Pₓ of the mathematical function F₃.

### System

According to another aspect, the invention relates to a system 400 comprising the first device 100, and comprising hardware and software means to perform the method 10.

The hardware and software means may comprise at least one communication interface 130 for receiving REC₁ the first dataset DATₛₑₜ₁ characterizing a state of at least one component 101 of the first device 100.

The hardware and software means may comprise at least one calculator 120 for:
- Computing CMP₁ the motion signal Sₘᵥ using the first dataset DATₛₑₜ₁;
- Filtering FLT₁ the motion signal Sₘᵥ on at least one frequency range of interest Xₐ, ..., X_{b} using the filtering function F₂, said filtering FLT₁ allowing to generate at least one filtered motion signal S_{mv'} characteristic of at least one disturbance introduced by at least one component 101 of the first device 100;

- Determining DET₁ at least one parameter P₁, ..., Pₓ related to the filtered motion signal Sₘᵥ'
- Automatically generating GEN₁ the compensating signal S_{comp} using the determined parameter P₁, ..., Pₓ.

In one embodiment, the system 400 comprises a second device 200 remotely coupled to the first device 100.

The second device 200 may be coupled to the first device 100 in such a way that a change of state of at least one component 101 of the first device 100 causes a change of state of at least one component of the second device 200, or conversely. The change of state of at least one component 101 of the first device 100 may be equivalent to the change of state of the at least one component of the second device 200. It is meant by "equivalent" that the change of state of the components is approximately equivalent, with a tolerated margin of error.

The first device 100 may be a remote device of a telemanipulator system and the second device 200 may be a local device of said telemanipulator system.

According to another aspect, the invention relates to a computer program product comprising instructions which, when the program is executed by a computer, causes the computer to execute the steps of the invention.

According to another aspect, the invention relates to a storage medium having stored thereon the computer program product. The storage medium is a tangible support. The storage medium is not a transient signal.

### Hardware configuration

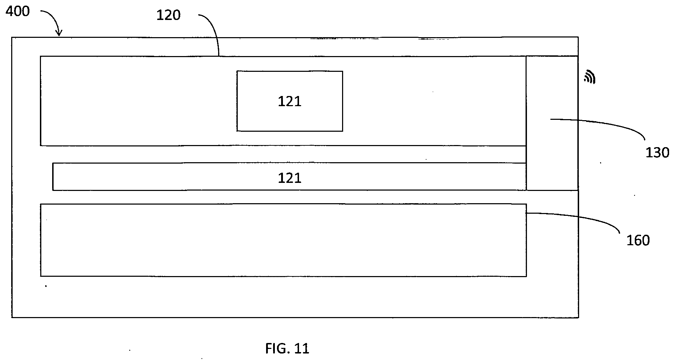

Figure 11 illustrates an example of hardware configuration of the system 400 of the invention.

The system 400 can be seen as a calculator interacting with a computer program.

The system 400 comprises a calculator 120. The calculator 120 comprises, for example, one or several processors adapted to interpret instructions in the form of computer programs. The processing may be executed by one processor sequentially or simultaneously, or according to another method, by one or several processors.

The calculator 120 may comprise a data processing module to perform calculations, a memory 121 connected to the data processing module, a computer readable medium and optionally a reader adapted to read a computer readable medium.

The system 400 may comprise an input module, an output module, and a communication interface 130.

Each function of the system 400 may be executed by making the data processing module to read a predetermined program on a material, such as the memory 121, so that the data processing module executes calculations, commands communications to the communication interface and commands reading or writing data in the memory 121 and in the computer readable medium.

The method may be executed on one computer or on a distributed system between several computers (for example cloud computing).

The memory 121 may comprise a computer readable storing medium. The computer readable storing medium is a tangible support readable by a reader of the calculator 120, suitable for memorizing electronic instructions, and suitable for being coupled to at least one communication interface of the system 400. The computer readable storing medium is a tangible support. The computer readable storing medium is not a transient signal, such as radio waves, or others free-space propagation electromagnetic waves, such as light pulses or electronic signals. The computer readable storing medium is for example an electronic storing device, a magnetic storing device, an optical storing device, an electromagnetic storing device, a semiconductor storing device, or any combination of two or more of those examples. For example, the computer readable storing medium is an optical disk, a magneto-optical disk, a read-only memory (ROM), an erasable programmable read-only memory (EPROM), an electrically erasable programmable read-only memory (EEPROM), a random-access memory (RAM), a magnetic card or an optical card. The memory 121 may comprise an operating system to load the program of the invention. The memory 121 may comprise means for storing parameters variables created and modified during the execution of the precited program.

The calculator 120 may comprise at least one of the following elements: a set of one or several processors, such as a central processing unit (CPU), a graphical processing unit (GPU), a microcontroller, a digital signal processor (DSP), and suitable for reading instructions in the form of computer programs; a programmable logical circuit such as an application specific integrated circuit (ASIC), a field programmable gate array (FPGA), a programmable logical device (PLG), a system on chip (SOC) and/or an electronic card on which are stored steps of the method according to the invention. The computer product program may comprise the computer readable storing medium.

The program instructions may be stored on a computer readable storing support comprising, for example, a removable support, such as for example, and not limited to, a compact disc read only memory, a removable disc, a database, a server, or any other adapted storage support.

The program instructions may also come from an external source to be downloaded through a network. In that case, the computer product program may comprise a computer readable data support on which are stored the instructions of the program or a data support on which are encoded the instructions of the program.

The form of the program instructions may comprise, for example, a form of source code, a form of computer executable, or any form intermediate between a source code and a form of computer execution, such as a form resulting from the conversion of source code via an interpreter, assembler, compiler, linker, or locator.

Alternatively, the program instructions may comprise firmware instructions, state definition data, integrated circuit configuration data (e.g., VHDL), or object code. The program instructions may be written in any combination of one or more programming languages, such as object-oriented programming language (e.g., C++, JAVA, Python), procedural programming language (e.g., C language).

The system 400 may comprise a user interface 160 comprising an input device and an output device.

The input device comprises for example a keyboard and/or a pointing interface such as a mouse.

The output device is adapted to return information to a user, electrically or sensory, for example visually or sonorously. The output device comprises for example a graphical user interface. The output interface may comprise the input device, for example in the case of a tablet.

The system 400 may comprise a set of at least one communication interface. The set of at least one communication interface allows communication between elements of the system 400, such as between the memory 121 and the calculator 120, and optionally between at least one element of the system 400 and one element external to the system 400. The set of at least one communication interface may establish a physical link or a wireless link between elements of the system 400 and/or between at least one element of the system 400 and at least one device external to the system 400.

## Claims

1. Computer implemented method (10) for automatically generating a compensating signal (S_{comp}) to compensate for at least one disturbance introduced by at least one component of a first device (100), the method (10) comprising the following steps:
• Receiving (REC₁), by means of a first communication interface (130), a first dataset (DATₛₑₜ₁) characterizing a state of the at least one component of the first device (100);
• Performing the following steps by means of a first calculator (120):
∘ Computing (CMP₁) a motion signal (Sₘᵥ) using the first dataset (DATₛₑₜ₁), said motion signal (Sₘᵥ) resulting from at least one motion of the first device (100), and characterizing at least one disturbance introduced by at least one component of the first device (100);
∘ Filtering (FLT₁) the motion signal (Sₘᵥ) to remove frequencies outside of at least one frequency range of interest (Xₐ, ..., X_{b}), said filtering (FLT₁) allowing to generate at least one filtered motion signal (S_{mv'}) characteristic of at least one disturbance source;
∘ Determining (DEM₁) at least one parameter (P₁, ..., Pₓ) related to the motion signal (S_{mv'}),
∘ Automatically generating (GEN₁) the compensating signal (S_{comp}) using said determined at least one parameter (P₁, ..., Pₓ).

2. The method (10) according to claim 1, wherein at least one determined parameter (P₁, ..., Pₓ) related to the filtered motion signal (S_{mv'}) comprises a phase shift and/or an amplitude of a graphical representation of said filtered motion signal (Sₘᵥ').

3. The method (10) according to any of the previous claim, wherein a mathematical function (F₃) is fitted to the filtered motion signal (Sₘᵥ'), and wherein at least one parameter (P₁, ..., Pₓ) is determined using an equation and/or a graphical representation of said mathematical function (F₃).

4. The method (10) according to any of the previous claims, wherein the received first input dataset (DATₛₑₜ₁) comprises at least:
• First time data (Dₜᵢₘ₁), motor position data (Dₚₒₛ) and motor input current data (D_{cur}) and/or;
• Motor velocity data (Dv) and second time data (Dtiₘ₂) and/or,
• Motor torque data (D_{TQ}).

5. The method (10) according to any of the previous claims, wherein the motion signal (Sₘᵥ) comprises an acceleration signal.

6. The method (10) according to any of the previous claims, wherein the motion signal (Sₘᵥ) comprises a torque signal.

7. The method (10) according to any of the previous claims, further comprising executing, by means of the first calculator (120), a first learning function to automatically adjust the compensating signal (Scomp).

8. The method (10) according to any of the previous claims, further comprising automatically applying the compensating signal (S_{comp}) to the first device (100) by means of the first calculator (120).

9. The method (10) according to any of the previous claims, wherein the first device (100) is a robotic device.

10. System (400) comprising hardware and software means adapted to perform the method (10) according to any of claims 1 to 9.

11. The system (400) according to claim 10, wherein the hardware and software means comprise:
• The first communication interface (130) for receiving (REC₁) the first dataset (DATₛₑₜ₁) characterizing a state of the at least one component (101) of the first device (100);
• The first calculator (120) for:
∘ Computing (CMP₁) the motion signal (Sₘᵥ) using the first dataset (DATₛₑₜ₁);
o Filtering (FLT₁) the motion signal (Sₘᵥ) on at least one frequency range of interest (Xₐ, ..., X_{b}) using the filtering function (F₂), said filtering (FLT₁) allowing to generate at least one filtered motion signal (Sₘᵥ') characteristic of at least one disturbance source;
o Determining (DEM₁) at least one parameter (P₁, ..., Pₓ) related to the filtered motion signal (Sₘᵥ'),
∘ Automatically generating (GEN₁) the compensating signal (S_{comp}) using said determined at least one parameter (P₁, ..., Pₓ).

12. The system (400) according to claim 10 to 11, further comprising the first device (100).

13. The system (400) according to claim 12, further comprising a second device (200) manipulable by a user, and remotely coupled to the first device (100) in such a way that a change of state of at least one component (101) of the first device (100) causes an equivalent change of state of at least one component (201) of the second device (200).

14. A computer program product comprising instructions which, when the program is executed by a computer, cause the computer to carry out the steps of the method according to any of claims 1 to 9.

15. A computer-readable storage medium having stored thereon the computer program product of claim 14.
